# EUROPEAN PATENT APPLICATION

(11) **EP 1 707 056 A1**
(43) Date of publication of application: **04.10.2006**
(21) Application number: 05006707.3
(22) Date of filing: 29.03.2005
(51) Int. Cl.: A23C 9/00, A23C 1/12

(54) **Shelf-stable condensed milk with reduced caloric content**

(71) Applicant: NESTEC S.A., 1800 Vevey (CH)
(72) Inventor: Groux, Michel John Arthur, 3438 Lauperswill (CH); Beutler, Ernst, 3550 Langnau (CH)
(74) Representative: Chautard, Cécile

(57) **Abstract**

This invention relates to a reduced-calorie sweetened condensed milk containing polyols and/or polydextrose and having a shelf life stability equal to standard sweetened condensed milk. The invention also relates to a method for manufacturing such a product.

## Description

This invention relates to a reduced-calorie sweetened condensed milk having a shelf life stability equal to standard sweetened condensed milk. The invention also relates to a method for manufacturing such a product.

### Background of the invention

Sweetened condensed milk is basically concentrated milk to which sugar has been added. In its manufacturing, heat treated milk along with sugar is taken to the evaporator, where it gets concentrated. The product is then cooled and seeding lactose is added such that lactose forms very small crystals in the supersaturated solution.

The standard product has long been used in the bakery and confectionery trades, and it normally contains 8% fat, 45 % sugar, 20% SNF and 27% moisture. The high amount of sugar is aimed to give a solution having an osmotic pressure sufficiently high enough to prevent the growth of microorganisms which would cause product spoilage, i.e. approximately 61.0 to 64.0 % sugar solids in the water phase.

In view of providing healthier products and improving the image of condensed milks for weight-concious people, it would be of interest to have a sweetened condensed milk with reduced-sugar content. However, this would inevitably lead to an impaired shelf-life stability and texture. It is thus an object of the present invention to provide such a product, with maintained shelf-life stability and texture as in standard sweetened condensed milks and a method for manufacturing it.

### Summary of the invention

It has been surprisingly found that a calorie-reduction of at least 25% compared to standard SCM, may be obtained with a controled water activity, enabling a shelf-life stability of at least 12 months, by using polyols or polydextrose as part of the sweetener.

Accordingly, it is a first object of the present invention to provide a shelf stable calorie-reduced sweetened condensed milk composition containing polyols and/or polydextrose as part of the sweetener.

In a preferred process according to the invention, a milk base is prepared by mixing skimmed milk, sugar and polyol or polydextrose as part of the sweetener; heating the mixture for 1 to 1200 s at a temperature of about 80 to 150°C; evaporating, cooling, crystalising and filing the product in hygienic conditions.

The sweetened condensed milk of the present invention may have a reduced calorie-content of about 25% whilst maintaining a shelf-life stability of at least 12 months. It has also a smooth texture and all the beneficial effects of reduced-calorie product on health.

### Detailed description of the invention

The sweetened condensed milk generally has a water content of 15 to 30% by weight, preferably 25 to 28%. The fat content of the sweetened condensed milk is generally 0 to 20% fat by weight, preferably 5 to 10%. The sweetened condensed milk preferably has a water activity (defined as the ratio of the water vapour pressure over a food to that over pure water) of lower than 0.86, most preferably between 0.80 and 0.85. The standard filling technique valid for condensed milk can be used.

In the shelf stable calorie-reduced sweetened condensed milk according to the present invention, polyols and/or polydextrose are used to replace part of the sugar and still maintening the required water activity. In a preferred embodiment, the amount of sugar may be from 0 to about 45% by weight.

In one embodiment, the sugar is replaced in totality by polyols or polydextrose.

The polyols according to the present invention may be any suitable polyol including for example sorbitol, maltitol, glycerin, mannitol, polyglycitol, xylitol, lactitol monohydrate, anhydrous isomalt, erythritol or their derivatives, or mixtures thereof. The polydextrose according to the present invention is preferably used for the preparation of colored products because it showed significant browning reaction in SCM after a short time storage. For uncolored and white SCMs, polyols are then preferably used as well as for the manufacture of sugar-free sweetened condensed milks.

Polyols or polydextrose are present in the final product, in an amount depending on the required final calorie-reduction and water activity (see Table 1). In fact, polyols and polydextrose amount depends on their relative sweetness vs. sucrose, their respective molecular weight and respective calorie content. Based on the Table bellow, the skilled person is able to determine the preferable amounts of polyols or polydextrose, depending on the targeted calore reduction.

**Table 1: Polyols comparison chart**

| **product** | **% relative sweetness vs. sucrose** | **molecular weight** | **calorie content (Kcal/g)** | |
|---|---|---|---|---|
| | | | **USA** | **EU** |
| sorbitol | 60 | 182 | 2.6 | 2.4 |
| mannitol | 50 | 182 | 1.6 | 2.4 |
| polyglycitol powders | <30 | 170,000-360,000 | 3 | N/A |
| maltitol | 90 | 344 | 2.1 | 2.4 |
| xylitol | 100 | 152.17 | 2.4 | 2.4 |
| lactitol monohydrate | 30-40 | 362.33 | 2 | 2.4 |
| anhydrous isomalt | 40 | 344.32 | 2 | 2.4 |
| erythritol | 60-70 | 122 | 0.2 | N/A |
| glycerin | 55-75 | 99 | 4.3 | 4.3 |
| polydextrose | 0 | <22,000 | 1 | 1 |
| sucrose | 100 | 342 | 4 | 4 |
| fructose | 117 | 180 | 4 | 4 |
| maltose | 30 | 342 | 4 | 4 |

Apart from the sweetener, the SCM may contain fat. Fat may be present in a reduced amount but the SCM according to the present invention may be fat-free. The SCM may also comprise solids non-fat e.g milk proteins, milk sugar and minerals; and moisture. These ingredients may be in amount as in standard condensed milk. Other optional ingredients such as flavours such as fruit flavours, chocolate, vanilla or oce de leite, colorants, minerals, vitamins, probiotics may be added to the SCM.

In order to put the process of the present invention into practice, a standardized milk base is prepared, that is to say the respective quantities by weight of fats and non-fat solids are adjusted to desired values by adding to the milk base, according to need, for example skimmed milk, cream or anhydrous milk fats. Preferably, a mixture of pasteurized skimmed milk and pasteurized cream or anhydrous milk fats is standardized to have a desired fat content.

The heat treatment may take place by direct or indirect heating in any normal apparatus enabling the liquid to be kept at 80-150°C, for about 1 to 1200 s. After the heat treatment, the liquid is concentrated by evaporation with expansion in a single effect or preferably a multiple effect evaporator, to a dry matter content of preferably 65 to 75%. The dry matter content will also depend on the desired a_{w} and the nature of the polyol, in particular its molecular weight (see Table 1).

The concentrate is then preferably cooled to a temperature of <25°C. If flavourings are used, any flavouring concentrate may for example be used on a lipidic, aqueous, alcoholic, or liqueur type support or a mixture of these diluents. Various type of flavourings may be added such as chocolate, cocoa, coffee, banana, strawberry, cherry, orange, cinnamon, vanilla, chestnut, almond, baileys cream or whisky cream, for example. The quantity of flavourings used may represent according to its nature, preferably 0.05 to 5% by weight of the dry matter of the final product. According to a variant of the flavouring addition, applicable to heat sensitive flavours, for example those diluted with alcohol, this is carried out in an hygienic maner in the sweetened milk base.

The concentrate is then further crystalized as conventional by addition of seeding lactose. then filled into a container, and the container is closed and sealed. The container can for example be a small pot, a can or a plastic cup, for example. The filling process is preferably a clean filling operation in an environment with clean filtered air, as used for filling SCM. Preferably, all the operations following evaporation are carried out in an hygienic maner.

The calorie-reduced SCM prepared by such a process has a shelf life of at least 12 months. It may be used as is, or in confectionery or cooking applications such as puddim, as topings, creamer or sweetener.

### Examples

The following examples illustrate the invention. In these, percentages and parts are by weight, unless indicated to the contrary.

### Example 1 : Preparation of a reduced calorie SCM

120g of sugar, 900 g of skimmed milk and 96 g of maltitol are mixed so as to obtain a milk base, which is heated at 95°C for 300 seconds and was then concentrated by evaporation to 69% dry matter. The concentrate was then cooled to a temperature around 20/ 30°C. It is crystalized by addition of 0.01 g of seeding lactose and then packaged in small pots in hygenic conditions.
The product as a calorie reduction of about 25% compared to standard SCM.

### Example 2 : Calorie reduction in comparison with existing SCM

Four reduced calorie SCM are prepared as in example 1, having the composition as presented in Table 2.

**table 2.**

| in % by weight | standard | SMC1 | SMC2 | SMC3 | SMC4 |
|---|---|---|---|---|---|
| Sugar | 45 | 30 | 27 | 30 | 27.2 |
| Skim milk SNF | 20 | 25.5 | 25.5 | 20.5 | 25.5 |
| Polydextrose | | 5 | 0 | 0 | 0 |
| Sorbitol | | 9 | 16 | 0 | 12.8 |
| Maltitol | | 0 | 0 | 18 | 3.2 |
| Milk fat | 8 | 0 | 0 | 0 | 0 |
| **Total solids** | **73** | **69.5** | **68.5** | **69.5** | **68.7** |
| Kcal/100g | 328.4 | 242.7 | 243.9 | 244.7 | 244.11 |

The four prepared compositions were compared to the standard SCM formula of table 2. The results are presented in Table 3 bellow.

**Table 3.**

| | Standard SCM | SMC1 | SMC2 | SMC3 | SMC4 |
|---|---|---|---|---|---|
| Kcal/100g | **328.4** | 242.7 | 243.9 | 244.7 | 244.11 |
| Reduction to standard | **0** | **26.1 %** | **25.7 %** | **25.5 %** | **25.7 %** |

## Claims

1. A shelf stable calorie-reduced condensed milk product containing polyols and/or polydextrose as part of the sweetener to replace sugar.

2. A product according to claim 1, in which the polyol is sorbitol, maltitol, glycerin, mannitol, polyglycitol, xylitol, lactitol monohydrate, anhydrous isomalt, erythritol or their derivatives, or mixtures thereof.

3. A product according to claim 1 or 2, in which the sugar is in an amount of 0 to 45% by weight.

4. A product according to one of claims 1 to 3, in which the fat is comprised between 0 and 20% by weight.

5. A product according to one of claims 1 to 4, having a reduced calorie content of about 25% compared to standard sweetened condensed milk.

6. A product according to one of claims 1 to 5, having a water activity value lower than 0.86.

7. A process for for the manufacture of a calorie reduced condensed milk **characterized in that** a milk base is prepared by mixing skimmed milk, sugar and polyol or polydextrose as part of the sweetener; heating the mixture for 1 to 1200 seconds at a temperature of about 80 to 150°C; evaporating, cooling, crystalising and filing the product in hygienic conditions.

8. A method of providing a healthier product based on sweetened condensed milk comprising providing to the consumer a calorie-reduced condensed milk according to one of claims 1 to 6.
